# EUROPÄISCHE PATENTANMELDUNG

(11) **EP 1 022 297 A1**
(43) Veröffentlichungstag der Anmeldung: **26.07.2000**
(21) Anmeldenummer: 00101208.7
(22) Anmeldetag: 21.01.2000
(51) Int. Cl.: C08G 18/10, B60R 13/08

(54) **Schalldämpfendes Polyurethan**

(30) Priorität: 25.01.1999 DE 19902802
(71) Anmelder: BASF AKTIENGESELLSCHAFT, 67056 Ludwigshafen (DE)
(72) Erfinder: Kreyenschmidt, Martin, Dr., 67551 Worms (DE); Rodewald, Dieter, Dr., 67059 Ludwigshafen (DE); Lorenz, Reinhard, Dr., 67117 Ludwigshafen (DE); Tischer, Gerlinde, 01945 Ruhland (DE)
(74) Vertreter: Isenbruck, Günter, Dr.

(57) **Zusammenfassung**

Die Erfindung betrifft ein Verfahren zur Herstellung eines Polyurethans mit einem Verlustfaktor im Bereich von 0,2 bis 0,8 durch in Kontakt bringen von mindestens einer eine gegenüber Isocyanaten reaktive Verbindung aufweisenden Komponente A und einer Polyisocyanate aufweisenden Komponente B.

## Beschreibung

Die Erfindung betrifft ein Verfahren zur Herstellung eines Polyurethans mit guter Schalldämpfung, sowie dieses Polyurethan als auch dessen Verwendung.

Polyurethane werden in einer Vielzahl von Anwendungen eingesetzt. Eine dieser Anwendungen ist der Einsatz von Polyurethanen als Schaum. Diese Schäume müssen wiederum abhängig von den Einsatzgebieten den unterschiedlichsten Anforderungen gerecht werden. Derartige Anforderungen sind beispielsweise hohe Elastizität, gute Schalldämpfungseigenschaften und große Langlebigkeit. Die guten Schalldämpfungseigenschaften sind insbesondere beim Einsatz im Automobilbau von großem Interesse. Weiterhin ist es bei der Herstellung und Verarbeitung von Polyurethanprodukten, insbesondere von Formkörpern, bevorzugt, daß das eingesetzte Polyurethan bzw. die eingesetzten Polyurethanedukte, gute Fließeigenschaften besitzen. Dieses gilt insbesondere, wenn ein Polyurethanschaum eingesetzt wird. Eine hohe Fließfähigkeit ist in der Praxis in der Regel dann vorteilhaft, wenn von einem Einspritzpunkt aus eine Kavität mit langen Fließwegen, mit komplexer Geometrie und mit relativ großen Materialanhäufungen am Ende des Fließweges gefüllt werden muß.

DE 40 01 044 A1 beschreibt ein Verfahren zur Herstellung von viskoelastischen Polyurethan-Weichschaumstoffen mit einem verbesserten Schallabsorptionsvermögen durch Umsetzung von organischen Polyisocyanaten und/oder modifizierten organischen Polyisocyanaten mit Polyol/Polyesterolpolyolmischungen, wobei die Polyetherpolyole eine Funktionalität von 2 bis 4 und eine OH-Zahl von 20 bis 120 und die Polyesterpolyole eine OH-Zahl von 20 bis 150 aufweisen. Zur Herstellung der Polyurethan-Weichschaumstoffe werden die organischen Polyisocyanate, Polyetherpolyole/Polyesterpolyol-Mischungen und gegebenenfalls Kettenverlängerungsmitteln in Gegenwart von Katalysatoren, Treibmitteln und gegebenenfalls Hufs- und Zusatzstoffen bei Temperaturen von 0 bis 100 °C zur Reaktion gebracht. Die aus diesem Verfahren resultierenden viskoelastischen Polyurethan-Weichschaumstoffe besitzen einen Verlustfaktor von > 0,3, wobei je nach Schallfrequenz Verlustfaktoren bis zu 0,8 erreichbar sind.

Aus DE 37 10 731 A1 ist gleichfalls ein Polyurethan-Weichschaumstoff für Schallschutzzwecke bekannt mit einem Verlustfaktor von mindestens 0,3. Der Schaumstoff wird erhalten, indem man ein Isocyanat mit einem Polyol umsetzt, in welchem mindestens eine Komponente eine OH-Zahl von 180 bis 400 aufweist.

DE 38 06 476 A1 offenbart ein Verfahren zur Herstellung von kalthärtenden Polyurethan-Weichschaumstoffen mit hervorragenden Dämpfungseigenschaften durch Umsetzung eines Polyetherpolyolgemisches oder Polyetherpolyol/Polyesterpolyolgemisches mit Polyisocyanaten in Gegenwart von Wasser und gegebenenfalls organischen Treibmittelkatalysatoren, Schaumstabilisatoren und gegebenenfalls Hilfs- und Zusatzstoffen. Der aus diesen Verfahren erhaltene Polyurethan-Weichschaumstoff soll einen Verlustfaktor von 0,57 bis 1,09 erzielen.

DE 33 13 624 A1 offenbart einen Polyurethan-Weichschaumstoff mit schallisolierenden und entdröhnenden Eigenschaften mit einem Verlustfaktor von mindestens 0,4.

Die vorgenannten, aus dem Stand der Technik bekannten Polyurethan-Weichschäume werden den eingangs genannten Anforderungen nur unzureichend gerecht.

Es ist somit erfindungsgemäße Aufgabe, ein Polyurethan, insbesondere ein Polyurethanschaum, mit guten Schalldämpfungs- und Fließeigenschaften, insbesondere mit guten Schalldämpfungseigenschaften, sowie ein Herstellungsverfahren für dieses Polyurethan bzw. für den Polyurethanschaum zur Verfügung zu stellen.

Erfindungsgemäß wird diese Aufgabe gelöst durch ein Verfahren zur Herstellung eines Polyurethans mit einem Verlustfaktor im Bereich von 0,2 bis 0,8 durch in Kontakt bringen von mindestens einer eine gegenüber Isocyanaten reaktive Verbindung aufweisenden Komponente A und einer Polyisocyanate aufweisenden Komponente B, wobei entweder die Komponente B ein Prepolymer, erhältlich aus der Umsetzung eines ersten Polyesterols oder ersten Polyetherols mit mindestens einer sekundären OH-Gruppe mit einem Zahlenmittel des Molekulargewichts im Bereich von 300 bis 1200 g/mol oder mindestens zwei davon mit einer NCO-Gruppen-haltigen Verbindung, oder die Komponente A mindestens ein weiteres Polyesterol oder ein weiteres Polyetherol oder mindestens zwei davon aufweist, wobei die weiteren Polyetherole oder die weiteren Polyesterole unabhängig voneinander jeweils ein Zahlenmittel des Molekulargewichts im Bereich von 300 bis 1200 g/mol besitzen und primäre und sekundäre OH-Gruppen aufweisen.

Es ist bevorzugt, daß das voranstehende Verfahren gegebenenfalls in Gegenwart von Treibmitteln, Katalysatoren, Hilfsmitteln und/oder Zusatzstoffen erfolgen kann.

Ferner ist es erfindungsgemäß bevorzugt, daß mindestens eine zuvor definierte Komponente A und mindestens eine zuvor definierte Komponente B in dem erfindungsgemäßen Verfahren bzw. des daraus resultierenden Polyurethans verwendet wird.

Zudem ist es erfindungsgemäß bevorzugt, daß mindestens ein erstes und ein weiteres Polyesterol oder mindestens ein erstes Polyetherol und mindestens ein weiteres Polyetherol gleich sind. Darüber hinaus ist es bevorzugt, daß sowohl mindestens ein erstes und ein weiteres Polyol als auch mindestens ein erstes Polyetherol und ein weiteres Polyetherol gleich sind.

Darüber hinaus besteht eine erfindungsgemäße Ausführungsform darin, daß das erste Polyesterol oder das erste Polyetherol oder vorzugsweise beide keine primäre OH-Gruppe besitzen.

Die in dem erfindungsgemäßen Verfahren eingesetzten Polyesterole oder Polyetherole können linear oder nicht-linear, d.h. verzweigt, sein. Die linearen Polyesterole oder Polyetherole weisen vorzugsweise 2 OH-Gruppen auf. Bei den verzweigten Polyetherolen sind mehr als 2 OH-Gruppen bevorzugt und 3-OH-Gruppen besonders bevorzugt. Im Fall der verzweigten Polyetherole oder Polyesterole ist es bevorzugt, daß die OH-Gruppen an verschiedenen Zweigen eines verzweigten Kohlenwasserstoffes sich befinden.

In dem erfindungsgemäßen Verfahren ist es weiter bevorzugt, daß die Komponente A mindestens ein Polyesterol und/oder Polyetherol, die unabhängig voneinander jeweils ein Zahlenmittel des Molekulargewichts im Bereich von 300 bis 1200, bevorzugt von 500 bis 1100 und besonders bevorzugt von 600 bis 1000 g/mol besitzen, aufweist. Polyole mit diesen Molekulargewichten führen zu Polyurethanen mit schalldämpfenden Eigenschaften und werden als Dämpfungspolyole bezeichnet.

Es ist erfindungsgemäß bevorzugt, daß die Polyesterole und/oder Polyetherole jeweils unabhängig voneinander primäre und sekundäre OH-Gruppen aufweisen.

Die Polyetherole oder Polyesterole oder deren Mischungen, die überwiegend primäre OH-Gruppen aufweisen, werden bevorzugt in der Komponente A eingesetzt. Hingegen werden die Polyetherole oder Polyesterole oder deren Mischungen, die überwiegend sekundäre OH-Gruppen aufweisen, bevorzugt in der Komponente B eingesetzt. Dieses geschieht insbesondere durch Bildung eines Prepolymers mit mindestens einem der Polyisocyanate der Komponente B.

Die erfindungsgemäß eingesetzten Polyesterole besitzen vorzugsweise eine OH-Zahl von 80 bis 300, bevorzugt von 80 bis 250 und besonders bevorzugt von 100 bis 200 mgKOH/g. Ferner ist bei den erfindungsgemäß eingesetzten Polyetherolen eine OH-Zahl im Bereich von 80 bis 300, bevorzugt 80 bis 250 und besonders bevorzugt von 100 bis 220 mgKOH/g vorteilhaft. Die OH-Zahl wird gemäß DIN 53240 bestimmt.

In dem erfindungsgemäßen Verfahren weist das Polyesterol vorzugsweise mindestens eines der folgenden Bestandteile auf: Eine mindestens eine Kohlenwasserstoffkette aufweisende Polycarbonsäure oder eine mindestens einen Kohlenwasserstoffring aufweisende Polycarbonsäure und ein C₂- bis C₂₀-Diol.

Erfindungsgemäß besonders geeignete Polycarbonsäuren weisen 2 bis 5, bevorzugt 2 bis 3 und besonders bevorzugt 2 Carbonsäuregruppen auf. Weiterhin können die Polycarbonsäuren auch in Form ihrer Anhydride eingesetzt werden.

Bei der mindestens eine Kohlenwasserstoffkette aufweisenden Polycarbonsäure ist es bevorzugt, daß diese Kohlenwasserstoffkette 1 bis 50, bevorzugt 2 bis 20 und besonders bevorzugt 3 bis 10 Kohlenstoffatome in der Kohlenwasserstoffkette trägt. Als mindestens eine Kohlenwasserstoffkette aufweisende Polycarbonsäuren sind Adipinsäure, Bernsteinsäure und Glutarsäure besonders bevorzugt.

Als mindestens ein Kohlenwasserstoffring aufweisende Polycarbonsäuren haben sich erfindungsgemäß Dicarbonsäuren mit 7 bis 40, bevorzugt 8 bis 20 und besonders bevorzugt 8 bis 15 Kohlenstoffatomen bewährt. Unter diesen Polycarbonsäuren sind Phthalsäure, Isophthalsäure, Terephthalsäure, endo-Methylen-tetrahydrophthalsäure, und Hexahydrophthalsäure besonders bevorzugt.

Im erfindungsgemäßen Verfahren sind neben dem C₂- bis C₂₀-Polyolen C₂- bis C₁₅-Polyole bevorzugt und C₂- bis C₁₀-Polyole besonders bevorzugt. Bevorzugte Polyole weisen 2 bis 5, bevorzugt 2 bis 3 und besonders bevorzugt 2 OH-Gruppen auf. Insbesondere bevorzugt sind unter diesen Polyolen Ethlyenglykol, Diethylenglykol, Propandiol, Butandiol, Pentandiol, Neopentylglykol, Dipropylenglykol und/oder Hexandiol. Ebenso geeignet sind Polyalkylenoxide mit Molmassen von 150 bis 700 g/mol, z.B. lineares Polypropylenoxid mit einer Molmasse von 500 bis 700 g/mol (z.B. Pluriol P 600, Fa. BASF) oder lineares Polyethylenoxid mit einer Molmasse von 200 bis 400 g/mol (z.B. Pluriol E 300, Fa. BASF).

In einer erfindungsgemäß bevorzugten Ausführungsform weist das Polyesterol Adipinsäure, vorzugsweise in einer Menge von 60 bis 100, besonders bevorzugt 80 bis 100 mol-%, bezogen auf die insgesamt im Polyesterol eingesetzte Carbonsäure bzw. Dicarbonsäure, sowie gegebenenfalls mindestens eine Säure ausgewählt aus der Gruppe Phthalsäure, Isophthalsäure, Terephthalsäure, endo-Methylen-tetrahydrophthalsäure, Hexahydrophthalsäure, Bernsteinsäure und Glutarsäure, bevorzugt in einer Menge von 0 bis 40, besonders bevorzugt 0 bis 20 mol-%, jeweils bezogen auf die insgesamt im Polyesterpolyol eingesetzte Carbonsäure bzw. Dicarbonsäure, auf. In einer weiteren erfindungsgemäßen Ausführungsform weist das Polyesterpolyol Neopentylglykol, bevorzugt in einer Menge von 30 bis 100, besonders bevorzugt von 70 bis 100 mol-%, gegebenenfalls Dipropylenglykol, bevorzugt in einer Menge von 0 bis 70, bevorzugt 0 bis 30 mol-% auf Gegebenenfalls wird ein Diol ausgewählt aus der Gruppe Ethylenglykol, Diethylenglykol, Propandiol, Butandiol, Pentandiol, Hexandiol und ein Polyalkylenoxid, bevorzugt in einer Menge von 0 bis 30, besonders bevorzugt 0,1 bis 20 mol-%, jeweils bezogen auf das insgesamt im Polyesterpolyol eingesetzte Diol verwendet.

Darüber hinaus ist ein erfindungsgemäßes Polyesterol bevorzugt, dessen Säurezahl im Bereich von 0,01 bis 2, bevorzugt 0,1 bis 1 und besonders bevorzugt von 0,2 bis 0,4 mg KOH/g liegt. Ferner hat es sich erfindungsgemäß bewährt, daß das Polyesterol eine Viskosität bei 25 °C im Bereich von 500 bis 6.000, bevorzugt von 2.000 bis 4.000 und besonders bevorzugt von 2.500 bis 3.500 mPa*s aufweist.

Zudem ist es in dem erfindungsgemäßen Verfahren bevorzugt, daß zusätzlich ein katalytisch aktives Polyetherol eingesetzt wird, das mindestens eine tertiäre Amino-Gruppe aufweist.

Vorzugsweise wird das katalytisch aktive Polyetherol in der Komponente A eingesetzt. Der Einsatz des katalytisch aktiven Polyetherols dient insbesondere der Verbesserung der Fließeigenschaften des noch nicht ausgehärteten Polyurethans. Dieses ist insbesondere bei der Herstellung von Polyurethanschäumen und von Gebilden aus Polyurethanschäumen mit komplexer Geometrie vorteilhaft.

Bei den zuvor genannten, mindestens eine tertiäre Aminogruppe aufweisenden Polyetherolen gehen von dem Aminstickstoff jeweils eine oder zwei Polyetherketten, vorzugsweise mit OH-Gruppen aus.

Besonders geeignet als Polyetherole mit einer tertiären Aminogruppe sind Alkoxylate des 1,4-Bis-(3-aminopropyl)-piperazins, des 1,2-Bis-(3-aminopropyl)-ethylenamins, des 1,3-Bis-(3-aminopropyl)-propylendiamins, des 1,2-Bis-(2-aminoethyl)-ethylendiamins und ähnlicher Verbindungen mit OH-Zahlen im Bereich 150 bis 500, bevorzugt 200 bis 450 und besonders bevorzugt 220 bis 420 mg KOH/g. Die Alkoxylierung dieser Ausgangsprodukte kann alleine mit Propylenoxid oder mit Mischungen aus Propylenoxid und Ethylenoxid erfolgen, die Viskositäten der Alkoxylate liegen bei 25 °C, meist zwischen 5000 und 8000 mPa*s. Als katalytisch aktive Polyole können ebenfalls Alkoxylate des 4-Dimethylamino-butylamins, des 3-Dimethylamino-propylamins, des 2-Dimethylamino-ethylamins und ähnlicher Verbindungen verwendet werden, wobei die OH-Zahlen im Bereich 150 bis 500, bevorzugt 200 bis 450 und besonders bevorzugt 220 bis 420 mg KOH/g liegen und die Viskositäten der Alkoxylate bei 25°C meist zwischen 40 und 500 mPa*s betragen. Auch hier kann die Alkoxylierung alleine mit Propylenoxid oder mit Mischungen aus Propylenoxid und Ethylenoxid erfolgen.

Man unterscheidet Dämpfungspolyole für die A-Komponente und solche für die B-Komponente: Beim Einsatz in der A-Komponente weisen die Dämpfungspolyole bevorzugt einen Gehalt an primären OH-Gruppen von 60 bis 100 % auf; beim Einsatz in der B-Komponente ist der Gehalt an primären OH-Gruppen eher unerheblich.

Zudem sind Dämpfungs-Polyetherole bevorzugt, die aus mindestens einem C₂ bis C₂₀-, bevorzugt C₂- C₁₀- und besonders bevorzugt C₂- bis C₅-Oxiran gebildet sind. Unter den vorgenannten Oxiranen sind Ethylenoxid, Propylenoxid, Butylenoxid und Pentylenoxid bevorzugt, wobei Ethylenoxid und Propylenoxid besonders bevorzugt sind. Besonders bevorzugt ist es, daß mindestens Propylenoxid, vorzugsweise zu mindestens 50, bevorzugt mindestens 60 und besonders bevorzugt mindestens 80 mol-%, jeweils bezogen auf das insgesamt im Polyetherol verwendete Oxiran, in der Synthese des Polyetherols eingesetzt wird. Weiterhin sind Polyetherole bevorzugt, in denen neben Propylenoxid auch Ethylenoxid, vorzugsweise bis maximal 50, bevorzugt maximal 40 und besonders bevorzugt maximal 20 mol-%, jeweils bezogen auf das insgesamt im Polyetherol verwendete Oxiran, eingesetzt wird. Erfindungsgemäß sind Polyetherole bevorzugt, die eine Viskosität bei 25° von 20 bis 400, bevorzugt 50 bis 300 und besonders bevorzugt 70 bis 200 mPa * s aufweisen.

Bei der bei der Herstellung des erfindungsgemäßen Polyurethans oder Polyurethanschaumes eingesetzten Polyurethansynthesezusammensetzung ist es bevorzugt, daß der Massenanteil des Dämpfungs-Polyesterols oder Dämpfungs-Polyetherols an der Komponente A von 5 bis 70 Masse-% beträgt.

Es ist in anderen erfindungsgemäßen Ausführungsformen bevorzugt, daß das Polyesterol oder das Polyetherol oder deren Mischung in der Komponente B eingesetzt wird. Der Verlustfaktor läßt sich über die eingesetzte Menge an Dämpfungs-Polyesterol oder Dämpfungs-Polyetherol oder deren Mischung einstellen. Im allgemein gilt, je mehr des erfindungsgemäßen Polyetherols oder Polyesterols oder deren Mischung, vorzugsweise jeweils mit den vorgenannten Molekulargewichtsbereichen, in einer Komponente eingesetzt werden, um so höher liegt der Verlustfaktor. Erfindungsgemäß ist es bevorzugt, daß das Dämpfungs-Polyetherol oder Dämpfungs-Polyesterol oder deren Mischung in der Komponente A eingesetzt werden.

Ferner ist es in einer anderen erfindungsgemäßen Ausführungsform bevorzugt, daß der Massenanteil des Dämpfungs-Polyesterols oder Dämpfungs-Polyetherols oder deren Mischung an der Komponente B jeweils unabhängig voneinander von 2 bis 60 Masse-% beträgt, bevorzugt 5 bis 40 Masse-%.

Zur Herstellung des Prepolymers werden vorzugsweise NCO-Gruppen-haltige Verbindungen eingesetzt, deren NCO-Gruppengehalt im Bereich von 15 bis 50 Gew.-%, jeweils bezogen auf die NCO-Gruppen-haltige Verbindung, liegt. Erfindungsgemäß sind als NCO-Gruppen-haltige Verbindungen die Derivate des Methylendiphenylendiisocyanats (MDI), sowie deren Polymere (Polymer-MDI) und das Toluylendiisocyanat (TDI) bevorzugt. Unter den MDIs haben sich 4,4'-Methylendiphenylendiisocyanat (4,4'-MDI) und 2,4'-Methylendiphenylendiisocyanat (2,4'-MDI) besonders bewährt. Als Polymer-MDI sind die Verbindungen mit einer Viskosität bei 20 °C im Bereich von 50 bis 400, bevorzugt von 100 bis 300 und besonders bevorzugt von 150 bis 250 mPa*s geeignet.

Falls das durch das erfindungsgemäße Verfahren hergestellte Polyurethan als Schaum vorliegen soll, ist es vorteilhaft, mindestens ein Treibmittel einzusetzen.

Als Treibmittel, insbesondere zur Herstellung von Polyurethanschaumstoffen, können übliche chemisch beispielsweise Wasser, und/oder physikalisch wirkende Treibmittel verwendet werden. Als physikalisch wirkende Treibmittel sind Flüssigkeiten geeignet, welche gegenüber den organischen, gegebenenfalls modifizierten Polyisocyanaten inert sind und Siedepunkte unter 100 °C, vorzugsweise unter 50 °C, insbesondere zwischen -50 °C und 30 °C bei Atmosphärendruck aufweisen, so daß sie unter dem Einfluß der exothermen Polyadditionsreaktion verdampfen. Beispiele derartiger, vorzugsweise verwendbarer Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe wie beispielsweise übliche Fluorkohlenwasserstoffe und/oder Chlorkohlenwasserstoffe, wie beispielsweise Dichlormethan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen. Die Treibmittel werden üblicherweise den gegenüber Isocyanaten reaktiven Verbindungen zugesetzt. Sie können jedoch der Isocyanatkomponente oder als Kombination sowohl der Polyolkomponente als auch der Isocyanatkomponente oder Vormischungen dieser Komponenten mit den übrigen Autbaukomponenten zugesetzt werden. Die eingesetzte Menge des physikalischen wirkenden Treibmittels liegt bevorzugt bei 0,5 bis 25 Gew.-%, besonders bevorzugt 3 bis 15 Gew.-%, jeweils bezogen auf das Gewicht der insgesamt eingesetzten gegenüber Isocyanaten reaktiven Verbindungen. Wird Wasser als Treibmittel verwendet, bevorzugt in einer Menge von 0,5 bis 10 Gew.-% Wasser, besonders bevorzugt in einer Menge von 0,6 bis 7 Gew.-% Wasser, jeweils bezogen auf das Gewicht der insgesamt eingesetzten gegenüber Isocyanaten reaktiven Verbindungen, so wird es bevorzugt der Polyolkomponente A zugesetzt. Besonders bevorzugte Treibmittel basieren auf Wasser.

Besonders hat sich als Treibmittel oder als Treibmittelbeimischung Kohlendioxid bewährt. Das Kohlendioxid kann bei Raumtemperatur als Gas eingesetzt werden. In anderen Ausführungsformen ist es vorteilhaft, daß CO₂ unter Druck, vorzugsweise nicht gasförmig, der Komponente A oder der Komponente B oder beiden zuzumischen. Es ist weiterhin vorteilhaft, daß das Kohlendioxid sich im Laufe der Polymerisationsreaktion zumindest zu einem Teil aus den Cyanatgruppen der entsprechenden Komponente bildet.

Neben dem Verlustfaktor, der im Bereich von 0,2 bis 0,8, bevorzugt von 0,25 bis 0,7 und besonders bevorzugt von 0,3 bis 0,6 liegt, weist das aus dem erfindungsgemäßen Verfahren erhältliche Polyurethan vorzugsweise mindestens eines der folgenden Eigenschaften auf:
- Eine Resonanzfrequenz im Bereich von 30 bis 500, bevorzugt von 60 bis 400 und besonders bevorzugt von 80 bis 250 Hz.
- Ein dynamischer E-Modul im Bereich von 1 bis 50, bevorzugt von 4 bis 40 und besonders bevorzugt von 5 bis 30 N/cm².

Der Verlustfaktor ist als der Quotient aus Speichermodul und Verlustmodul definiert und wird nach DIN 53246 bestimmt.

Ein nach dem erfindungsgemäßen Verfahren hergestellter Polyurethanschaum weist mindestens eine oder bevorzugt beide der folgenden und vorstehenden Eigenschaften auf:
- Die mittlere Zellgröße liegt im Bereich von 0,1 bis 3,0 mm bevorzugt von 1,5 bis 0,4 und besonders bevorzugt von 0,15 bis 1 mm.
- Das Raumgewicht bewegt sich im Bereich von 20 bis 550, bevorzugt von 40 bis 400 und besonders bevorzugt von 45 bis 300 g/l.

Das durch das erfindungsgemäße Verfahren erhältliche Polyurethan wird insbesondere für Gebilde, vorzugsweise Schäume, Fasern, Folien, Formkörpern, Filme, Beschichtungen oder zumindestens teilweise mit dem Polyurethan gefüllte Räume, beispielsweise bei der Hohlraumversiegelung im Kfz-Bau, verwendet.

Weiterhin können vorgenannte Gebilde das durch das erfindungsgemäße Verfahren erhältliche Polyurethan beinhalten. Zudem ist es erfindungsgemäß bevorzugt, das durch das erfindungsgemäße Verfahren erhältliche Polyurethan in Gebilden zum Schalldämpfen oder diese Gebilde zu diesem Zweck zu verwenden.

Hochelastisdhe Polyurethanschäume bezeichnet der Fachmann als 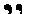 schnappig". Diese hochelastischen Polyurethanschäume besitzen einen Verlustfaktor, der meist in einem Bereich von 0,05 bis 0,15 liegt. Die hochelastischen Polyurethanschäume werden z.B. bei Automobilsitzkissen verwendet.

Eine weitere erfindungsgemäß bevorzugte Ausführungsform betrifft Polyurethanschäume mit erhöhter Dämpfung, die das durch das erfindungsgemäße Verfahren erhältliche Polyurethan aufweisen und die der Fachmann als 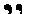 müde" bezeichnet. Die Polyurethanschäume mit erhöhter Dämpfung werden wiederum unterschieden in mäßig-dämpfende und hoch-dämpfende Schaumstoffe. Die mäßig-dämpfenden Schaumstoffe weisen einen Verlustfaktor im Bereich von 0,3 bis 0,6 auf Die hoch-dämpfenden Schäume zeichnen sich durch einen Verlustfaktor von > 0,8 aus.

Es ist besonders bevorzugt, daß die durch das erfindungsgemäße Verfahren erhältlichen Polyurethane, insbesondere Polyurethanschäume, in Matten, Belägen und Auskleidungen und insbesondere in Teppichen im Automobil eingesetzt werden.

Die weiteren Ausgangsstoffe in dem erfindungsgemäßen Verfahren werden im folgenden beispielhaft beschrieben:

Als Isocyanate kommen die an sich bekannten aliphatischen, cycloaliphatischen, araliphatischen und/oder aromatischen Isocyanate, bevorzugt Diisocyanate in Frage, die gegebenenfalls nach allgemein bekannten Verfahren biuretisiert und/oder iscyanuratisiert worden sein können. Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4, 2-Methylpentamethylendiisocyanat-1,5, Tetramethylendiisocyanat-1,4, Lysinesterdiisocyanate (LDI), Hexamethylendiisocyanat-1,6 (HDI), Cyclohexan-1,3- und/oder 1,4-diisocyanat, 2,4- und 2,6-Hexahydrotoluylendiisocyanat sowie die entsprechenden Isomerengemische, 4,4'-, 2,2'- und 2,4' -Dicyclohexylmethandiisocyanat sowie die entsprechenden Isomerengemische, 1-Isocyanato-3,3,5-trimethyl-5-isocyanatomethylcyclohexan (IPDI), 2,4- und/oder 2,6-Toluylendiisocyanat, 4,4'-, 2,4'- und/oder 2,2'-Diphenylmethandiisocyanat (monomeres MDI), Polyphenylpolymethylen-polyisocyanate (Polymer MDI) und/oder Mischungen enthaltend mindestens zwei der genannten Isocyanate. Außerdem können Ester-, Harnstoff-, Allophanat-, Carbodiimid-, Uretdion- und/oder Urethangruppen enthaltende Di- und/oder Polyisocyanate in dem erfindungsgemäßen Verfahren eingesetzt werden.

Als gegenüber Isocyanaten reaktive Verbindungen können zweckmäßigerweise solche mit einer Funktionalität von 2 bis 8, vorzugsweise 2 bis 6, und einem Molekulargewicht von 60 bis 10000 verwendet werden, die als gegenüber Isocyanaten reaktive Gruppen Hydroxyl-, Thiol- und/oder primäre und/oder sekundäre Aminogruppen aufweisen. Bewährt haben sich z.B. Polyole ausgewählt aus der Gruppe der Polyetherole, beispielsweise Polytetrahydrofuran sowie Polyesterole, Polythioether-polyole, hydroxylgruppenhaltigen Polyacetale und hydroxylgruppenhaltige aliphatische Polycarbonate oder Mischungen aus mindestens zwei der genannten Polyole. Vorzugsweise Anwendung finden Polyesterole und/oder Polyetherole. Die Hydroxylzahl der Polyhydroxylverbindungen beträgt dabei in aller Regel 20 bis 850 mg KOH/g und vorzugsweise 25 bis 60 mg KOH/g.

Als Polyolkomponenten werden dabei für Polyurethane bzw. -schäume, insbesondere Polyurethanhartschaumstoffe, die gegebenenfalls Isocyanuratstukturen aufweisen können, hochfunktionelle Polyole, insbesondere Polyetherole auf Basis hochfunktioneller Alkohole, Zuckeralkohole und/oder Saccharide als Startermoleküle verwendet. Für flexible Schäume werden 2- und/oder 3-funktionelle Polyether- bzw. Polyesterole auf Basis Glyzerin und/oder Trimethylolpropan und/oder Glykolen als Startermoleküle bzw. zu veresternde Alkohole eingesetzt. Die Herstellung der Polyetherole erfolgt dabei nach einer bekannten Technologie. Geeignete Alkylenoxide zur Herstellung der Polyole sind beispielsweise Tetrahydrofuran, Ethylenoxid, 1,3-Propylenoxid, 1,2- bzw. 2,3-Butylenoxid, Styroloxid, vorzugsweise Ethylenoxid und 1,2-Propylenoxid. Die Alkylenoxide können einzeln, alternierend nacheinander oder als Mischungen verwendet werden. Besonders bevorzugt werden beim Kalt-Weich-Schaum als Polyetherole solche eingesetzt, die zum Abschluß der Alkoxylierung mit Ethylenoxid alkoxyliert wurden und damit primäre Hydroxylgruppen aufweisen. Die Polyetherole besitzen eine Funktionalität von vorzugsweise 2 bis 6 und insbesondere 2 bis 3 und Molekulargewichte von 2000 bis 6000, vorzugsweise 2000 bis 5000.

Geeignete Polyesterole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Die Polyesterole besitzen vorzugsweise eine Funktionalität von 2 bis 4, insbesondere 2 bis 3, und ein Molekulargewicht von 1200 bis 3000, vorzugsweise 1500 bis 3000 und insbesondere 1500 bis 2500.

Als gegenüber Isocyanaten reaktive Verbindungen können gegebenenfalls Diole und/oder Triole mit Molekulargewichten von 60 bis <400 als Kettenverlängerungs- und/oder Vernetzungsmittel bei dem erfindungsgemäßen Verfahren eingesetzt werden. Zur Modifizierung der mechanischen Eigenschaften, z.B. der Härte und zur Erhöhung der Stabilität des fließenden Schaumes, kann sich jedoch der Zusatz von Kettenverlängerungsmitteln, Vernetzungsmitteln oder gegebenenfalls auch Gemischen davon als vorteilhaft erweisen. Die Kettenverlängerungs- und/oder Vernetzungsmittel weisen vorzugsweise ein Molekulargewicht von 60 bis 300 g/mol auf. In Betracht kommen beispielsweise aliphatische, cycloaliphatische und/ oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.

Sofern zur Herstellung der Polyurethane Kettenverlängerungsmittel, Vernetzungsmittel oder Mischungen davon Anwendung finden, kommen diese zweckmäßigerweise in einer Menge von 0 bis 20 Gew.-%, vorzugsweise von 0,5 bis 5 Gew.-%, bezogen auf das Gewicht der insgesamt eingesetzten, gegenüber Isocyanaten reaktiven Verbindungen zum Einsatz.

Als Katalysatoren können allgemein bekannte Verbindungen eingesetzt werden, die die Reaktion von Isocyanaten mit den gegenüber Isocyanaten reaktiven Verbindungen stark beschleunigen, wobei vorzugsweise ein Gesamtkatalysatorgehalt von 0,01 bis 8 Gew.-%, insbesondere 0,1 bis 5 Gew.-%, bezogen auf das Gewicht der insgesamt eingesetzten gegenüber Isocyanaten reaktiven Verbindungen, verwendet wird. Beispielsweise können folgende Verbindungen verwendet werden: Triethylamin, Tributylamin, Dimethylbenzylamin, Dicyclohexylmethylamin, Dimethylcyclohexylamin, N,N,N',N'-Tetramethyl-diaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1,2-Dimethylimidazol, N-Hydroxypropylimidazol, 1-Azabicyclo-(2,2,0)-octan, 1,4-Diazabicyclo-(2,2,2)-octan (Dabco) und Alkanolaminverbindungen, wie Triethanolamin, Triisopropanolamin, N-Methyl- und N-Ethyl-diethanolamin, Dimethylaminoethanol, 2-(N,N-Dimethylaminoethoxy)ethanol, N,N',N-Tris-(dialkylaminoalkyl)hexahydrotriazine, z.B. N, N', N-Tris-(dimethylaminopropyl)-s-hexahydrotriazin, Eisen(II)-chlorid, Zinkchlorid, Bleioctoat und vorzugsweise Zinnsalze, wie Zinndioctoat, Zinndiethylhexoat, Dibutytzinndilaurat und/oder Dibutyldilaurylzinnmercaptid, 2,3-Dimethyl-3,4,5,6-tetrahydropyrimidin, Tetraalkylammoniumhydroxide, wie Tetramethylammoniumhydroxid, Alkalihydroxide, wie Natriumhydroxid, Alkalialkoholate, wie Natriummethylat und Kaliumisopropylat, und/oder Alkalisalze von langkettigen Fettsäuren mit 10 bis 20 C-Atomen und gegebenenfalls seitenständigen OH-Gruppen.

Der Reaktionsmischung zur Herstellung der Polyurethane können gegebenenfalls noch weitere Hilfsmittel und/oder Zusatzstoffe zugesetzt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen. Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkisch Rotöl und Erdnußöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-%, bezogen auf 100 Gew.-% der insgesamt eingesetzten gegenüber Isocyanaten reaktiven Verbindungen, angewandt. Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat, Montmorillonit und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern. Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Isocyanate und dem Gewicht der insgesamt eingesetzten gegenüber Isocyanaten reaktiven Verbindungen, einverleibt, wobei jedoch der Gehalt an Matten, Vliesen und Geweben aus natürlichen und synthetischen Fasern Werte bis 80 Gew.-% erreichen kann.

Geeignete Flammschutzmittel sind beispielsweise Trikresylphosphat,Tris-(2-chlorethyl)phosphat, Tris-(2-chlorpropyl)phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-polyadditionsprodukte verwendet werden. Im allgemeinen hat es sich als zweckmäßig erwiesen, 5 bis 50 Gew.-%, vorzugsweise 5 bis 25 Gew.-%, der genannten Flammschutzmittel, bezogen auf das Gewicht der insgesamt eingesetzten gegenüber Isocyanaten reaktiven Verbindungen, zu verwenden.

Zur Herstellung der erfindungsgemäßen Polyurethane werden die Isocyanate und die gegenüber Isocyanaten reaktiven Verbindungen in solchen Mengen zur Umsetzung gebracht, daß das Äquivalenzverhältnis von NCO-Gruppen der Isocyanate zur Summe der gegenüber Isocyanaten reaktiven Wasserstoffatome 0,5 bis 1,25 : 1, vorzugsweise 0,6 bis 1,15 : 1 und insbesondere 0,7 bis 1,05 : 1, beträgt. Falls insbesondere die Polyurethanschaumstoffe zumindest teilweise Isocyanuratgruppen gebunden enthalten, wird üblicherweise ein Verhältnis von NCO-Gruppen zur Summe der reaktiven Wasserstoff-atome von 1,5 bis 60 : 1, vorzugsweise 1,5 bis 8 : 1, angewandt.

Die Polyurethane werden vorteilhafterweise nach dem one shot-Verfahren, beispielsweise mit Hilfe der Hochdruck- oder Niederdruck-Technik in offenen oder geschlossenen Formwerkzeugen, beispielsweise metallischen Formwerkzeugen, hergestellt. Üblich ist auch das kontinuierliche Auftragen des Reaktionsgemisches auf geeigneten Bandstraßen zur Erzeugung von Paneelen oder Blockschäumen.

Als besonders vorteilhaft hat es sich erwiesen, nach dem Zweikomponentenverfahren zu arbeiten und die gegenüber Isocyanaten reaktiven Verbindungen, gegebenenfalls das oder die Treibmittel, die Katalysatoren und/oder Hilfs- und/oder Zusatzstoffe in der Komponente A zu vereinigen und als Komponente B die Isocyanate oder Mischungen aus den Isocyanaten sowie Umsetzungsprodukte aus Isocyanaten und Polyolen (sogenannte Prepolymere) und gegebenenfalls Treibmittel zu verwenden.

Die Erfindung wird nun anhand nicht limitierender Beispiele erläutert.

### Beispiele

### Beispiel für ein Dämpfungs-Polyesterol:

In einer Laborglasapparatur, ausgerüstet mit Rührer, Füllkörperkolonne, Destillationsaufsatz, Stickstoffanschluß, Vakuumanschluß sowie Temperatur- und Druckmeßeinrichtung werden 326 g Dipropylenglykol und 1012 g Neopentylglykol bei einer Temperatur von 130 °C unter Rühren homogenisiert und danach mit 1292 g Adipinsäure versetzt. Während der Temperaturerhöhung auf 220 °C werden unter Normaldruck 300 ml Reaktionswasser entfernt. In einer anschließenden Vakuumphase bis 10 mbar wird die Reaktion fortgeführt bis eine Säurezahl <0,5 mg KOH/g erreicht ist. Bei Säurezahlen von ca. 5 mg KOH/g und ca. 2 mg KOH/g wird das Reaktionsprodukt mit jeweils 5 ppm tetra-n-Butyltitanat katalysiert. Das so hergestellte Polyesterol weist folgende Kennwerte auf:

| | | |
|---|---|---|
| OH-Zahl: | 140 | mg KOH/g |
| Säurezahl: | 0,27 | mg KOH/g |
| Wassergehalt: | 0,024 | % |
| Viskosität (25 °C): | 2400 | mPa*s |

### Beispiel für ein Dämpfungs-Polyetherol

Ausgehend von einem linearen Polypropylenoxid mit OH-Zahl 250 mg KOH/g wurden durch Ethoxylierung (nach den in der Polyetherol-Technologie üblichen Verfahren mit KOH als Katalysator) folgende Polyetherole hergestellt:

In einem 5 l Stahlkessel mit einer Ethylenoxid-Versorgung, einem Vakuumanschluß, einer Stickstoffversorgung und einem Rührer werden 1623,4 g eines linearen Polypropylenoxids mit der OH-Zahl 250 vorgelegt. Es werden 16 g einer wäßrigen 47%-igen Lösung von Kaliumhydroxid zugegeben. Diese Mischung wird 2 h lang mit trockenem Stickstoff gespült und danach auf 100 °C erwärmt. Nach Erreichen von 100 °C wird ein Vakuum angelegt. Dieses Vakuum wird bis zu einem Druck von 1 mbar geführt und bei diesem Druck für 1,5 h gehalten. Das Vakuum wird durch Stickstoffeinspeisung gebrochen und ein Stickstoffdruck von 3,5 bar aufgebaut. Anschließend werden 885 g Ethylenoxid über 2,5 h bei 105 °C zugegeben und bei 105 °C über 2,5 h nachgerührt. Anschließend wird über 1 h ein Wasserstrahlpumpenvakuum angelegt, um restliches freies Ethylenoxid abzuziehen. Das Produkt wird durch Zugabe von 5 % Ambosol und 1 % Wasser aufgearbeitet und filtriert und anschließend entwässert. Dem entwässerten Polyol werden 0,15 % 2,6-Di-tert.-butyl-p-cresol als Antioxidanz zugegeben. Die Ausbeute beträgt 2400 g.

Die OH-Zahl beträgt 158 mg KOH/g. Die Viskosität bei 25 °C beträgt 120 mPa *s. Das Produkt enthält 64 % primäre OH-Gruppen.
- Dämpfüngs-Polyetherol 1:: OH-Zahl 158 (64 % primäre OH-Gruppen)
- Dämpfungs-Polyetherol 2:: OH-Zahl 125 (78 % primäre OH-Gruppen)

### Beispiel für ein Prepolymer mit Dämpfüngspolyol:

### Prepolymer 3

In einem 4l-Vierhalskolben mit Rührer, Thermometer, Tropftrichter und Heiz/Kühlbad werden 575 g einer Mischung aus 4,4'-Methylendiphenyldiisocyanat (4,4'-MDI) und 2,4'-Methylendiphenyldiisocyanat (2,4'-MDI) im Massenverhältnis 1:1 vorgelegt und auf 80 °C erwärmt. Innerhalb von 1,5 h werden 575 g eines linearen Polypropylenoxids der OH-Zahl 250 g/mol bei 80 °C zugegeben und 2 h bei 80 °C zwecks Nachreaktion gerührt. Anschließend werden bei 80 °C 862,5 g 4,4'-MDI, 87,5 g 2,4'-MDI und 775 g eines Polymer-MDIs mit der Viskosität 200 mPa*s (bei 20 °C) zugegeben und zur Homogenisierung 1 h nachgerührt.

Das beschriebene Prepolymer 3 enthält 20 Gew.-% des niedermolekularen Polyols; es wird als B-Komponente eingesetzt. Mit dem gleichen relativen Verhältnis der MDI-Typen zueinander wurden die Prepolymere 1, 2, 4 und 5 hergestellt, die 13 bzw. 18 bzw. 23 bzw. 28 Gew.-% des niedermolekularen linearen Polypropylenoxid mit der OH-Zahl 250 g/mol enthalten.

### Beispiel für eine A-Komponente (A1):

- 89 Gew.-Teile: eines trifunktionellen Polyetherols basierend auf Propylenoxid mit einem Ethylenoxidendblock von 14 % mit einer OH-Zahl von 35 mg KOH/g und einer nominellen OH-Funktionalität von 3.
- 3,2 Gew.-Teile: eines trifunktionellen Polyetherols basierend auf einer Mischung Propylenoxid/Ethylenoxid (28/62) mit einem Ethyolenoxidendblock von 10 % mit einer OH-Zahl von 40 mg KOH/g und einer nominellen OH-Funktionalität von 3.
- 2,5 Gew.-Teile: eines vierfunktionellen Polyetherols basierend auf Ethylendiamin und Propylenoxid mit einer OH-Zahl von 740 mg KOH/g.
- 0,5 Gew.-Teile: Butandiol-1,4
- 0,5 Gew.-Teile: einer 25 %igen Lösung von Dabco in Butandiol-1,4
- 0,3 Gew.-Teile: Bis(dimethylaminoethyl)ether
- 2,6 Gew.-Teile: Wasser

Die A-Komponente A1 wurde jeweils mit den Prepolymeren 1, 2, 4 und 5, die jeweils als B-Komponenten dienten, verschäumt, wobei stets ein Äquivalenzverhältnis von 0,78 : 1 verwendet wurde. Die Komponenten A und B wurden im Mischkopf einer Hochdruckschäum-Maschine (Puromat der Fa. Elastogran GmbH) vereinigt und über einen Beugungskanal in ein offenes der geschlossenes Formwerkzeug eingetragen. Die nach DIN 53246 bestimmten Werte für den dynamischen E-Modul und für den Verlustfaktor sind in der folgenden Tabelle 1 zusammengestellt. Mit steigender Menge an niedermolekularem Polyol im Prepolymer steigt der Verlustfaktor an und der dynamische E-Modul fällt ab.

**Tabelle 1**

| Prepolymer | 1 | 2 | 4 | 5 |
|---|---|---|---|---|
| Anteil niedermolekulares Polyol im Prepolymer | 13 % | 18 % | 23 % | 28 % |
| E-Modu [N/cm²] | 13,0 | 11,9 | 12,4 | 8,5 |
| Verlustfaktor | 0,33 | 0,35 | 0,39 | 0,45 |

Das Dämpfungs-Polyesterol aus obigem Beispiel (OH-Zahl 140 mg KOH/g, Viskosität 2400 mPa*s ) wurde in der beschriebenen A-Komponente eingesetzt, die wie folgt modifiziert wurde. Bei Verwendung von 10 Gew.-Teilen Dämpfungs-Polyesterol wurde der Gehalt an trifunktionellem Polyetherol (OH-Zahl 35 mg KOH/g, nominelle OH-Funktionalität von 3) von 89 auf 79 Gew.-Teile reduziert. Bei Verwendung von 12 Gew.-Teilen Dämpfungs-Polyesterol reduzierte sich der Gehalt an trifunktionellem Polyetherol auf 77 Gew.-Teile.

Die Komponenten A und B wurden im Mischkopf einer Hochdruckschäum-Maschine vereinigt (Äquivalenzverhältnis von B- und A-Komponente 0,78 : 1) und über einen Beugungskanal in ein offenes oder geschlossenes Formwerkzeug eingetragen. Die nach DIN 53246 bestimmten Werte für den dynamischen E-Modul und für den Verlustfaktor sind in Tabelle 2 zusammengestellt.

**Tabelle 2**

| | | | |
|---|---|---|---|
| Verlustfaktor | 0,344 | 0,362 | 0,388 |
| E-Modul [N/cm²] | 9,8 | 11,1 | 12,4 |
| Gew.-Teile Dämpfungs-Polyesterol in Komponente A | 10,00 | 12,00 | 15,00 |

Beispiel einer A-Komponente für einen Schaum (A2):
- 74 Gew.-Teile: eines trifunktionellen Polyetherols basierend auf Propylenoxid mit einem Ethylenoxidendblock von 14 % mit einer OH-Zahl von 35 mg KOH/g und einer nominalen OH-Funktionalität von 3.
- 15 Gew.-Teile: eines difunktionellen Polyesterols mit der OH-Zahl 140 mg KOH/g auf Basis von Adipinsäure, Diethylenglykol und Neopentylglykol (1:0,2:0,8).
- 3,6 Gew.-Teile: eines katalytisch aktiven Polyetherols auf Basis von 1,2-Bis―(3-amninopropyl)-ethylendiamin und Propylenoxid mit einer nominellen OH-Zahl von 335 mg KOH/g und einer nominellen OH-Funktionalität von 6.
- 0,4 Gew.-Teile: Triethanolamin
- 0,4 Gew.-Teile: einer 25 %-igen Lösung von Dabco in Butandiol-1,4
- 0,6 Gew.-Teile: Bis(dimethylaminoethyl)ether
- 2,6 Gew.-Teile: Wasser

Das Prepolymer 1, das hier als B-Komponente diente, und die A-Komponente A2 wurden im Mischkopf einer Hochdruckschäum-Maschine vereinigt (Äquivalenzverhältnis von B- und A-Komponente 0,78 : 1) und über einen Beugungskanal in ein offenes oder geschlossenes Formwerkzeug eingetragen. Die nach DIN 53246 bestimmten Werte für den dynamischen E-Modul bzw. den Verlustfaktor betrugen 12,2 N/cm² bzw. 0,38.

## Patentansprüche

1. Verfahren zur Herstellung eines Polyurethans mit einem Verlustfaktor im Bereich von 0,2 bis 0,8 durch in Kontakt bringen von mindestens einer eine gegenüber Isocyanaten reaktive Verbindung aufweisenden Komponente A und einer Poly-isocyanate aufweisenden Komponente B, wobei entweder
die Komponente B ein Prepolymer, erhältlich aus der Umsetzung eines ersten Polyesterols oder ersten Polyetherols mit mindestens einer sekundären OH-Gruppe mit einem Zahlenmittel des Molekulargewichts im Bereich von 300 bis 1200 g/mol oder mindestens zwei davon mit einer NCO-Gruppen-haltigen Verbindung,
oder
die Komponente A mindestens ein weiteres Polyesterol oder ein weiteres Polyetherol oder mindestens zwei davon aufweist, wobei die weiteren Polyetherole oder die weiteren Polyesterole unabhängig voneinander jeweils ein Zahlenmittel des Molekulargewichts im Bereich von 300 bis 1200 g/mol besitzen und primäre und sekundäre OH-Gruppen aufweisen.

2. Verfahren nach Anspruch 1, wobei mindestens eine in Anspruch 1 definierte Komponente A und mindestens eine im Anspruch 1 definierte Komponente B verwendet wird.

3. Verfahren nach Anspruch 2, wobei mindestens ein erstes und ein weiteres Polyesterol oder mindestens ein erstes Polyetherol und mindestens ein weiteres Polyetherol gleich sind.

4. Verfahren nach einem der Ansprüche 1 bis 3, wobei das erste Polyesterol oder das erste Polyetherol oder beide keine primäre OH-Gruppen besitzen.

5. Verfahren nach einem der Ansprüche 1 bis 4, wobei mindestens eines der Polyesterole mindestens ein C₂- bis C₂₀-Diol aufweist und mindestens eines der folgenden Bestandteile aufweist:
- eine mindestens eine Kohlenwasserstoffkette aufweisende Polycarbonsäure,
- eine mindestens einen Kohlenwasserstoffring aufweisende Polycarbonsäure.

6. Verfahren nach einem der Ansprüche 1 bis 5, wobei mindestens eines der Polyetherole mit mindestens einer tertiären Amino-Gruppe eingesetzt wird.

7. Verfahren nach einem der Ansprüche 1 bis 7, wobei die Komponenten mit mindestens einem Treibmittel zum Aufschäumen in Kontakt gebracht werden.

8. Polyurethan mit einem Verlustfaktor im Bereich von 0,2 bis 0,8 und mit zusätzlich mindestens einer der folgenden Eigenschaften
- Resonanzfrequenz im Bereich von 30 bis 500 Hz,
- dynamischer E-Modul im Bereich von 1 bis 50 N/cm²,
erhältlich durch in Kontakt bringen von mindestens einer eine gegenüber Isocyanaten reaktive Verbindung aufweisenden Komponente A und einer Polyisocyanate aufweisenden Komponente B.

9. Verfahren zur Einstellung des Verlustfaktors in dem in Anspruch 1 definierten Bereich oder zusätzlich mindestens einer der in Anspruch 8 definierten Eigenschaften eines Polyurethans, dadurch gekennzeichnet, daß ein Polyetherol oder Polyesterol oder mindestens zwei davon, die unabhängig jeweils ein Zahlenmittel des Molekulargewichts im in Anspruch 1 definierten Bereich besitzen, in das Polyurethan eingearbeitet wird.

10. Verwendung eines in Anspruch 8 definierten Polyurethans für Gebilde, insbesondere Schäume, Fasern, Folien, Formkörper, Filme, Beschichtungen oder mindestens teilweise mit dem Polyurethan gefüllte Hohlräume.

11. Gebilde beinhaltend ein in Anspruch 8 definiertes Polyurethan.

12. Verwendung eines in Anspruch 8 definierten Polyurethans oder ein in Anspruch 11 definiertes Gebilde zum Schalldämpfen.
